(19) Europäisches Patentamt
European Patent Office
Office européen des brevets

(11) **EP 2 117 139 B1**

(12) **EUROPEAN PATENT SPECIFICATION**

(45) Date of publication and mention
of the grant of the patent:
**03.10.2012 Bulletin 2012/40**

(51) Int Cl.:
*H04B 10/12* (2006.01)          *H04L 12/56* (2006.01)
*H04Q 11/00* (2006.01)

(21) Application number: **07846118.3**

(86) International application number:
**PCT/CN2007/071292**

(22) Date of filing: **21.12.2007**

(87) International publication number:
**WO 2008/083578 (17.07.2008 Gazette 2008/29)**

(54) **A SERVICE ASSEMBLY METHOD AND SYSTEM**

VERFAHREN UND SYSTEM FÜR EINE DIENSTBAUGRUPPE

PROCÉDÉ ET SYSTÈME POUR ENSEMBLE DE SERVICES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **27.12.2006 CN 200610168381**

(43) Date of publication of application:
**11.11.2009 Bulletin 2009/46**

(73) Proprietors:
• **Huawei Technologies Co., Ltd.
Shenzhen, Guangdong Province 518129 (CN)**
• **University Of Electronic Science
And Technology Of China
Sichuan 610054 (CN)**

(72) Inventors:
• **ZHANG, Yi
Shenzhen Guangdong 518129 (CN)**
• **ZHOU, Qian
Chengdu Sichuan 610054 (CN)**
• **LI, Lemin
Chengdu, Sichuan 610054 (CN)**
• **WANG, Sheng
Chengdu, Sichuan 610054 (CN)**
• **XU, Shizhong
Chengdu, Sichuan 610054 (CN)**

(74) Representative: **Thun, Clemens
Mitscherlich & Partner
Patent- und Rechtsanwälte
Sonnenstrasse 33
80331 München (DE)**

(56) References cited:
CN-A- 1 588 908          JP-A- 06 209 330
KR-A- 20040 018 785     US-A- 5 349 567
US-A1- 2003 099 243

• QIAN ZHOU ET AL: "Periodically adapted burst assembly algorithm based on novel traffic prediction in OBS networks" 5TH INTERNATIONAL CONFERENCE ON COMMUNICATIONS, CIRCUITS AND SYSTEMS - 11-13 JULY 2007, KOKURA, JAPAN, IEEE, PISCATAWAY, NJ, USA, 11 July 2007 (2007-07-11), pages 539-543, XP009130801 ISBN: 978-1-4244-1473-4
• Zhicheng Sui, Qingji Zeng, and Shilin Xiao: "Dynamic assembly on load estimate in optical burst-switched networks" Proc. of SPIE vol. 6022, no. 602246, 5 December 2005 (2005-12-05), 7 December 2007 (2007-12-07), pages 1-1, XP002572906 ISSN: 0277-786X DOI: 10.1117/12.636033 Retrieved from the Internet: URL:http://dx.doi.org/10.1117/12.636033> [retrieved on 2010-03-12]
• Yanjun Li, Xiaobing Hong, Jian Wu, and Jintong L. Lin: "A study of adaptive burst assembly mechanism in optical burst switch networks" Proc. SPIE vol. 5282, 23 September 2004 (2004-09-23), pages 169-175, XP002573036 ISSN: 0277-786X DOI: 10.1117/12.523827 Retrieved from the Internet: URL:http://dx.doi.org/10.1117/12.523827> [retrieved on 2010-03-12]

- SUILI FENG ET AL: "Limitation of and improvement to linear prediction and smoothing-based bandwidth allocation for VBR traffic" 19991205; 19991205 - 19991209, vol. 1A, 5 December 1999 (1999-12-05), pages 209-213, XP010373300
- XIAOJUN CAO ET AL: "Assembling TCP/IP packets in optical burst switched networks" GLOBECOM'02. 2002 - IEEE GLOBAL TELECOMMUNICATIONS CONFERENCE. CONFERENCE PROCEEDINGS. TAIPEI, TAIWAN, NOV. 17 - 21, 2002; [IEEE GLOBAL TELECOMMUNICATIONS CONFERENCE], NEW YORK, NY : IEEE, US, vol. 3, 17 November 2002 (2002-11-17), pages 2808-2812, XP010636258 ISBN: 978-0-7803-7632-8
- CAO X ET AL: "Traffic Statistics and Performance Evaluation in Optical Burst Switched Networks" JOURNAL OF LIGHTWAVE TECHNOLOGY, IEEE SERVICE CENTER, NEW YORK, NY, US, vol. 22, no. 12, 1 December 2004 (2004-12-01), pages 2722-2738, XP011123314 ISSN: 0733-8724
- HONGBIN LUO ET AL: "Burstification Queue Management in Optical Burst Switching Networks", PHOTONIC NETWORK COMMUNICATIONS, KLUWER ACADEMIC PUBLISHERS, BO LNKD- DOI: 10.1007/S11107-006-5326-Y, vol. 11, no. 1, 1 January 2006 (2006-01-01), pages 87-97, XP019214463, ISSN: 1572-8188

**Description**

FIELD OF THE TECHNOLOGY

The present invention relates to the field of optical communication technologies, and more particularly to a service convergence method and system.

BACKGROUND

Optical burst switching (OBS) is a switching technology with a switching granularity between the switching granularity of optical circuit switching (OCS) and that of optical packet switching (OPS). The OBS is more flexible and effective than the OCS, well supports burst packet traffic, and meanwhile reduces the requirements of optical devices, so that it has become an effective solution for the next generation optical network. The OBS is mainly adapted to separate control information from data information to fully utilize the huge bandwidth resources of optical fibers and the flexibility of electronic control. Data is transferred and exchanged in optical domains in the form of bursts. Burst header packets (BHPs) corresponding to the bursts one by one are also transferred in the optical domains, but only converted into electrical domains for processing at switching nodes. Therefore, a convergence method is needed to raise the data processing speed in the optical domains, so as to alleviate the load on electrical control units at the switching nodes, and realize the shaping of traffic and the differentiating of service qualities.

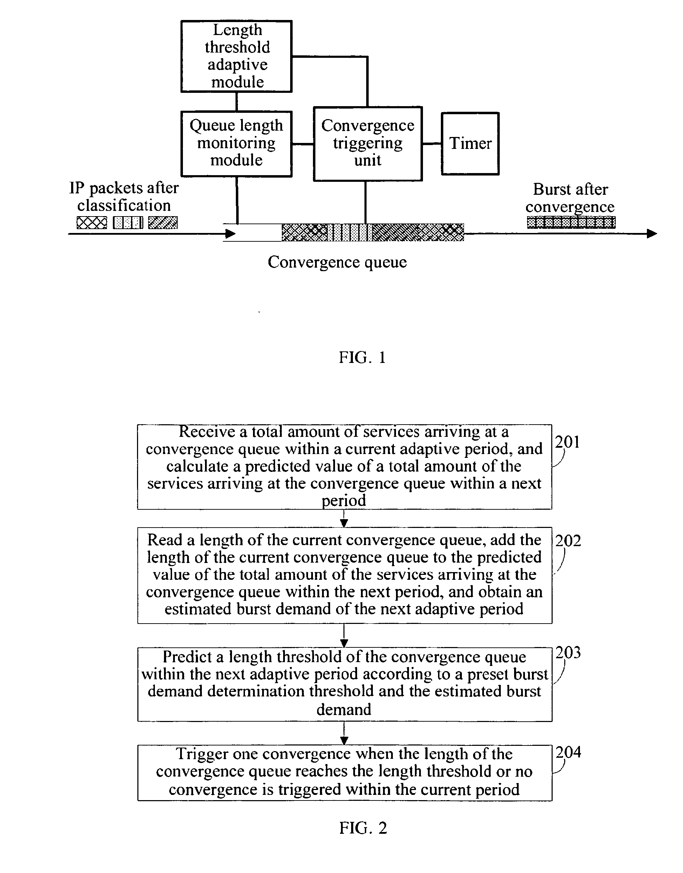

In the prior art, a convergence method based on an adaptive length threshold is provided. Referring to FIG. 1, a timer starts timing from 0, sends a timeout signal to a convergence triggering unit when a timing value reaches a fixed time threshold $T$, and resets the timing value to be 0 to restart timing when receiving a burst generation signal from the convergence triggering unit. A queue length monitoring module is adapted to monitor a length variation of a convergence queue in real time, and send a length threshold triggering signal to the convergence triggering unit when monitoring that the queue length reaches a current length threshold $L$. The convergence triggering unit sends a burst generation signal to the timer and a length threshold adaptive module when receiving the length threshold triggering signal from the queue length monitoring module or the timeout signal from the timer, and assembles all the IP packets in the convergence queue into a burst to be sent out when receiving a response signal from the length threshold adaptive module. The length threshold adaptive module reads a length value of the current queue from the queue length monitoring module when receiving the burst generation signal from the convergence triggering unit, then updates the length threshold $L$ by comparing the queue length value with a length threshold window, informs the queue length monitoring module of the new threshold $L$, and sends one response signal to the convergence triggering unit.

During the implementation of the present invention, through studying, the inventor discovers that the convergence method based on an adaptive length threshold has a weaker adaptability. This simple prediction mechanism qualitatively estimates the trend of the traffic variation by comparing the actual burst length with the length threshold window, and is unable to provide accurate traffic information. Therefore, it is difficult for the convergence method based on such prediction mechanism to realize an optimal dynamic adjustment of the length threshold, i.e., this method is adaptive to some extent, but has a rather limited adaptive precision. Moreover, the convergence method based on an adaptive length threshold always performs an adaptive adjustment on the threshold by using a single burst as a basic unit, so that the adaptive granularity thereof is fixed and lacking in flexibility.

Zhicheng Sui, Qingji Zeng, and Shilin Xiao: "Dynamic assembly on load estimate in optical burst-switched networks" Proc. of SPIE vol. 6022, no. 602246, 5 December 2005 (2005-12-05), 7 December 2007 (2007-12-07), pages 1-1 , XP002572906 ISSN: 0277-786X DOI: 10.1117 /12.636033 Retrieved from the Internet: URL: http://dx.doi.org/ 10.1117/12.636033 [retrieved on 2010-03-12] discloses a Dynamic Adaptive Assembly, DAA, method which introduces the current traffic weight in prediction time to make real-time estimation by Adaptive Auto-Regressive, AAR, linear filter and optical control packet is sent beforehand.

Yanjun Li, Xiaobing Hong, Jian Wu, and Jintong L. Lin: "A study of adaptive burst assembly mechanism in optical burst switch networks" Proc. SPIE vol. 5282 , 23 September 2004 (2004-09-23), pages 169 to 175, XP002573036, ISSN: 0277-786X DOI:10.1117/12.523827 Retrieved from the Internet: URL: http://dx.doi.org/10.1117/12.523827 [retrieved on 2010-03-12] discloses a method that burst length threshold could adjust dynamically as the traffic changes.

SUILI FENG ET AL: "Limitation of and improvement to linear prediction and smoothing-based bandwidth allocation for VBR traffic" 19991205-19991209, vol. 1 A, 5 December 1999 (1999-12-05), pages 209 to 213, XP010373300, analyses the limitation of the linear predictor for non-stationary video traffic and considers how to improve the prediction performance. It presents a dynamic bandwidth allocation method based on smoothing for transmitting MPEG1 coded video traffic to guarantee a fixed delay and make full use of the allocated bandwidth.

US 5,349,567 A (REED FRANCIS A [US]) 20 September 1994 (1994-09-20) discloses a normalizer based on a Least Mean Square, LMS, adaptive algorithm configured to provide effective normalization when the background noise is locally nonstationary and when the target may be subject to time spread of unknown extent.

XIAOJUN CAO ET AL: "Assembling TCP/IP packets in optical burst switched networks" GLOBECOM '02.2002-IEEE GLOBAL TELECOMMUNICATIONS CONFERENCE. CONFERENCE PROCEEDINGS. TAIPEI, TAIWAN, NOV. 17 to 21, 2002; [IEEE GLOBAL TELECOMMUNICATIONS CONFERENCE], NEW YORK, NY: IEEE, US, vol. 3, 17 November 2002 (2002-11-17), pages 2808 to 2812, XP010636258, ISBN: 978-0-7803-7632-8 discloses the performance of TCP traffic in OBS network and in particular, the effect of assembly algorithms on TCP traffics.

CAO X ET AL: "Traffic Statistics and Performance Evaluation in Optical Burst Switched Networks" JOURNAL OF LIGHTWAVE TECHNOLOGY IEEE SERVICE CENTER NEW YORK, NY, US, vol. 22, no. 12, 1 December 2004 (2004-12-01), pages 2722-2738, XP0111233141SSN:0733-8724 discloses: optical burst switching (OBS) is a promising switching technology to exploit the potential benefits of optical communication and, at the same time, support statistical multiplexing of data traffic at a fine granularity. To quantify its benefits, the paper describes several typical burst assembly algorithms and studies their impact on the assembled burst traffic characteristics as well as the performance of TCP traffic. Also described is a proactive burst scheduling algorithm, called burst overlap reduction algorithm (BORA), which schedules locally assembled bursts in such a way as to reduce burst contention at downstream nodes in OBS networks. Furthermore, to provide analytical insights into performance evaluation of OBS networks, a burst loss model at an OBS node and its extension to different reservation protocols are presented.

SUMMARY

Accordingly, embodiments of the present invention are directed to a service convergence method and system, capable of guiding the adjustment of a convergence threshold by using a traffic prediction mechanism, so as to improve the adaptive precision and flexibility of convergence.

A service convergence method is provided, which includes the following steps.

A total amount of packets arriving at a convergence queue within an adaptive period is received, and a predicted value of a total amount of the packets arriving at the convergence queue within a next adaptive period is calculated.

A length of the convergence queue is read, and the length of the convergence queue is added to the predicted value of the total amount of the packets to obtain an estimated burst demand of the next adaptive period.

A length threshold of the convergence queue within the next adaptive period is predicted according to a preset burst demand determination threshold and the estimated burst demand. When the length of the convergence queue within the next adaptive period reaches the length threshold or no burst has been assembled within the current adaptive period, all packets in the convergence queue into a burst to be sent out is assembled, in each adaptive period, the convergence queue always adopts the length threshold corresponding to the adaptive period to assemble all packets in the convergence queue into a burst to be sent out.

wherein a length threshold of the convergence queue within the next adaptive period is predicted according to a preset burst demand determination threshold and the estimated burst demand. comprises the following manners:

set the length threshold of the next adaptive period to a permitted minimum burst length if the estimated burst demand is smaller than a preset lower determination threshold of the burst demand;

set the length threshold of the next adaptive period to a permitted maximum burst length if the estimated burst demand is greater than a preset upper determination threshold of the burst demand; and

when the estimated burst demand falls between the preset lower determination threshold and the preset upper determination threshold of the burst demand, calculate the length threshold of the next adaptive period in the manner of: obtain a ratio of the difference between maximum burst length and the permitted minimum burst length to the difference between the preset upper determination threshold and the lower determination threshold of the burst demand, then multiply the ratio with preset the difference between the estimated burst demand and the preset lower determination threshold of the burst demand, and add the result of multiplying to minimum burst length.

A service convergence system including a traffic predicting unit and an edge convergence unit is also provided.

a traffic counting unit, adapted to count a total amount of packets arriving at a convergence queue within an adaptive period, and send the total amount of the packets when receiving an adaptive period ending signal sent by an edge convergence unit; The traffic predicting unit is adapted to receive the total amount of the packets sent by the traffic counting unit, calculate a predicted value of a total amount of the packets arriving at the convergence queue within a next adaptive period, and send the predicted value.

The edge convergence unit is adapted to receive the predicted value from the traffic predicting unit, read a length of the convergence queue, add the length of the convergence queue to the predicted value to obtain an estimated burst demand of the next adaptive period, predict a length threshold of the convergence queue within the next adaptive period according to a preset burst demand determination threshold and the estimated burst demand, and assemble all packets in the convergence queue into a burst to be sent out when a length of the convergence queue within the next adaptive period reaches the length threshold or no burst has been assembled within the current adaptive period, in each adaptive period, the convergence queue always adopts the length threshold corresponding to the adaptive period to assemble all packets in the convergence queue into a burst to be sent out.

wherein the edge convergence unit comprises:

a timer, adapted to send a period ending signal to a convergence triggering subunit and reset its own timing value to be zero to restart timing when the timing value reaches a preset threshold adjustment period;

a length threshold adaptive subunit, adapted to receive and store the predicted value of the total amount of the packets arriving at the convergence queue within the next adaptive period, send a convergence queue length request signal to a queue length monitoring subunit, predict the length threshold in the next adaptive period when receiving a length value of the current convergence queue, and send the predicted length threshold of the convergence queue to the queue length monitoring subunit, use the following manners to predict the length threshold in the next adaptive period: set the length threshold of the next adaptive period to a permitted minimum burst length if the estimated burst demand is smaller than a preset lower determination threshold of the burst demand, set the length threshold of the next adaptive period to a permitted maximum burst length if the estimated burst demand is greater than a preset upper determination threshold of the burst demand; and when the estimated burst demand falls between the preset lower determination threshold and the preset upper determination threshold of the burst demand, calculate the length threshold of the next adaptive period in the manner of: obtain a ratio of the difference between the permitted maximum burst length and the permitted minimum burst length to the difference between the preset upper determination threshold and the preset lower determination threshold of the burst demand, then multiply the ratio with the difference between the estimated burst demand and the preset lower determination threshold of the burst demand, and add the result of multiplying to minimum burst length;

the queue length monitoring subunit, adapted to update the length threshold of the convergence queue when receiving the predicted length threshold of the convergence queue, send a convergence triggering signal to a convergence triggering subunit when monitoring that the length of the convergence queue reaches the predicted length threshold of the convergence queue, and send the length of the convergence queue to the length threshold adaptive subunit when receiving the convergence queue length request signal; and

the convergence triggering subunit, adapted to trigger one convergence when receiving the convergence triggering signal sent by the queue length monitoring subunit or if no burst convergence has been completed within the period when receiving the period ending signal sent by the timer.

Seen from the above technical solutions, by using a new traffic prediction mechanism the total amount of the services arriving at the convergence queue within the current ended adaptive period is received, and the predicted value of the total amount of the services arriving at the convergence queue within the next period is calculated, so that the adaptive precision of convergence is increased, and the jitter of the convergence delay is reduced when meeting the range requirement of burst length variations. Further, the length threshold of the convergence queue used in the next adaptive period is predicted based on the length of the current convergence queue and the predicted value of the total amount of the services arriving at the convergence queue within the next adaptive period. When the length of the convergence queue reaches the predicted value of the length threshold or no convergence has been triggered in the current period, one convergence is triggered. In this manner, an adaptive adjustment is performed on the length threshold by taking the adaptive period as a unit, thereby realizing changeability of adaptive granularity in burst convergence and also increasing the flexibility of convergence.

BRIEF DESCRIPTION OF THE DRAWINGS

FIG. 1 is a block diagram of a system in the prior art;

FIG. 2 is a flow chart of an embodiment according to the present invention;

FIG. 3 is a schematic view showing a relation between a length threshold and an estimated burst demand according to an embodiment of the present invention;

FIG. 4 is a block diagram of a system according to an embodiment of the present invention;

FIG. 5 is a block diagram of an adaptive nonlinear differential prediction system according to an embodiment of the present invention;

FIG. 6 is a simulation diagram of a relation between an actual burst length and a load ratio according to an embodiment of the present invention;

FIG. 7 is a simulation diagram of a relation between a convergence delay and a load ratio according to an embodiment of the present invention;

FIG. 8 is a simulation diagram showing a performance comparison on convergence speed between a traffic prediction method provided by the present invention and an NLMS algorithm;

FIG. 9 is a simulation diagram showing a comparison on RPE with different Hurst parameters between a traffic prediction method provided by the present invention and an NLMS algorithm;

FIG. 10 is a simulation diagram showing a comparison on RPE with different load ratios between a traffic prediction method provided by the present invention and an NLMS algorithm; and

FIG. 11 is a simulation diagram of a relation between a threshold adjustment period and convergence delay jitter according to an embodiment of the present invention.

DETAILED DESCRIPTION

The embodiments of the present invention provide a periodic adaptive convergence method and system based on traffic prediction. In order to make the objectives, technical solutions, and advantages of the present invention more comprehensible, detailed descriptions of the embodiments are given below with reference to the accompanying drawings.

FIG. 2 is a flow chart of an embodiment according to the present invention, which includes the following steps.

In Step 201, a total amount of services arriving at a convergence queue within a current adaptive period is received, and a predicted value of a total amount of the services arriving at the convergence queue within a next period is calculated.

In Step 202, a length of the current convergence queue is read and added to the predicted value of the total amount of the services arriving at the convergence queue within the next period, so as to obtain an estimated burst demand of the next adaptive period.

In Step 203, a length threshold of the convergence queue within the next adaptive period is predicted according to a preset burst demand determination threshold and the estimated burst demand.

In Step 204, when the length of the convergence queue within the next adaptive period reaches the length threshold or no convergence has been triggered within the current period, one convergence is triggered.

Before Step 201, the method further includes: when a timing value reaches the adaptive period, one convergence is triggered, and the timing value is reset to be zero to restart timing.

The preset burst demand determination threshold is defined according to the permitted burst length range, which does not lead to a decrease of bandwidth utilization, nor limits the throughput of the whole network.

In each adaptive period, the convergence queue always adopts the length threshold corresponding to the adaptive period to trigger the convergence, i.e., to assemble all packets in the queue into a burst to be sent out when the length of the convergence queue reaches the length threshold.

At the end of each period, taking an $n$th period for example, a prediction coefficient is updated, and the traffic within the next period is predicted by reading an actual traffic $M[n]$ of the current period, invoking a predicted value $\hat{M}[n]$ of the traffic in the current period, and combining an actual traffic $M[n-k]$ of the previous p+1 periods, where $k = 1, 2, ..., p + 1$. The specific process is as follows.

First, non-linear differential pre-processing is performed on an actual traffic sequence $\{M[n]\}$ through Expression (1) to obtain a non-linear differential sequence $\{D[n]\}$.

$$D[n-k] = \log_{10} M[n-k] - \log_{10} M[n-k-1]$$
$$= \log_{10} \frac{M[n-k]}{M[n-k-1]}, \qquad k = 0, 1, ..., p \qquad (1)$$

Then, a prediction error $e[n]$ of the non-linear differential sequence $\{D[n]\}$ in the current period is calculated according to Expressions (2) and (3):

$$\hat{D}[n] = \log_{10} \hat{M}[n] - \log_{10} M[n-1] = \log_{10} \frac{\hat{M}[n]}{M[n-1]} \qquad (2)$$

$$e[n] = D[n] - \hat{D}[n] \qquad (3)$$

According to the above obtained prediction error $e[n]$, based on a normalized least-mean-square (NLMS) algorithm, a prediction coefficient $\overline{W}$ is updated through Expression (4) by using the non-linear differential sequence $\{D[n]\}$, and a one-step ahead prediction is performed through Expression (5) to obtain a predicted value $\hat{D}[n+1]$ of the non-linear differential sequence {D[n]}.

$$\vec{W} = \vec{W} + \frac{\mu e[n]\vec{D}_{n-1}}{\|\vec{D}_{n-1}\|^2},$$

$$\vec{D}_{n-1} = (D[n-1], D[n-2], ..., D[n-p]) \quad (4)$$

$$\hat{D}[n+1] = \vec{W}\vec{D}_n^T = \sum_{i=0}^{p-1} w_i D[n-i] \quad (5)$$

Next, a traffic predicted value $\hat{M}[n+1]$ is calculated through Expression (6).

$$\hat{M}[n+1] = 10^{\hat{D}[n+1]+\log_{10} M[n]} \quad (6)$$

An estimated burst demand $\hat{B}[n+1]$ of the next period is calculated through Expression (7) by reading a length value $s[n]$ of the current convergence queue and combining the traffic predicted value $\hat{M}[n+1]$ obtained in the previous step.

$$\hat{B}[n+1] = s[n] + \hat{M}[n+1] \quad (7)$$

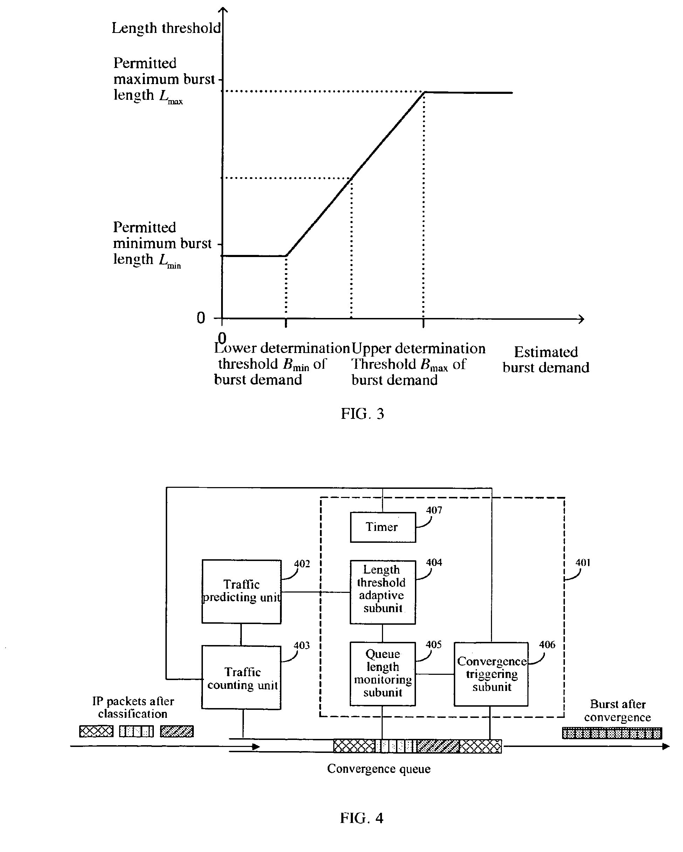

FIG. 3 is a relation chart of the length threshold and the estimated burst demand. A length threshold $L[n+1]$ corresponding to the next period may be calculated through Expression (8).

$$L[n+1] = \begin{cases} L_{\min}, & \hat{B}[n+1] < B_{\min} \\ L_{\max}, & \hat{B}[n+1] > B_{\max} \\ \dfrac{(\hat{B}[n+1]-B_{\min}) \times (L_{\max}-L_{\min})}{B_{\max}-B_{\min}} + L_{\min}, & B_{\min} \le \hat{B}[n+1] \le B_{\max} \end{cases} \quad (8)$$

Where $B_{\max}$ and $B_{\min}$ respectively represent an upper determination threshold and a lower determination threshold of a burst demand, and $L_{\max}$ and $L_{\min}$ respectively represent a permitted maximum burst length and a permitted minimum burst length.

The method of predicting the traffic of services in the current period is as follows.

A logarithm transform is performed on the received traffic sequence {M[n]} of the current period through Expression (9).

$$Y[n] = \log_{10} M[n] \quad (9)$$

A first-order differential transform is performed on a sequence {Y[n]} after logarithm transform according to Formula (10).

$$D[n] = Y[n] - Y[n-1] \quad (10)$$

A one-step ahead prediction is performed on the sequence $\{D[n]\}$ after differential transform to obtain the predicted value $\hat{D}[n+1]$ by using the NLMS algorithm.

An inverse differential transform is performed on the predicted value $\hat{D}[n+1]$ through Expression (11), and an inverse logarithm transform is performed through Expression (12) to revert $\hat{D}[n+1]$ into the predicted value $\hat{M}[n+1]$ of the traffic sequence $\{M[n]\}$.

$$\hat{Y}[n+1] = \hat{D}[n+1] + \bar{Y}[n] \qquad (11)$$

$$\hat{M}[n+1] = 10^{\hat{Y}[n+1]} \qquad (12)$$

The above method of predicting the traffic of services in the current period employs a logarithm function and a first-order absolute differential function to realize the pre-processing of the input traffic sequence. The pre-processing may also be realized by using an arc tangent function instead of the logarithm function and by using a first-order relative differential function instead of the first-order absolute differential function. The specific process is as follows.

The arc tangent transform is performed on the received traffic sequence $\{M[n]\}$ of the current period through Expression (13).

$$Y[n] = \arctan(M[n]) \qquad (13)$$

A first-order relative differential transform is performed on the sequence $\{Y[n]\}$ after arc tangent transform through Formula (14).

$$D[n] = \frac{Y[n] - Y[n-1]}{Y[n-1]} \qquad (14)$$

A one-step ahead prediction is performed on the sequence $\{D[n]\}$ after differential transform by using the NLMS algorithm to obtain the predicted value $\hat{D}[n+1]$.

An inverse relative differential transform is performed on the predicted value $\hat{D}[n+1]$ through Expression (15), and a tangent transform is performed through Expression (16) to revert $\hat{D}[n+1]$ into the predicted value $\hat{M}[n+1]$ of the traffic sequence $\{M[n]\}$.

$$\hat{Y}[n+1] = (\hat{D}[n+1] + 1) \times Y[n] \qquad (15)$$

$$\hat{M}[n+1] = \tan(\hat{Y}[n+1]) \qquad (16)$$

Thereby, a detailed description of a periodic adaptive convergence method based on traffic prediction provided by the present invention is given in the above embodiments. A system provided by the embodiments of the present invention is described in detail below with reference to the accompanying drawings.

FIG. 4 is a block diagram of a system according to an embodiment of the present invention. Referring to FIG. 4, the system includes a traffic counting unit 403, a traffic predicting unit 402, and an edge convergence unit 401.

The traffic counting unit 403 is adapted to count a total amount of services arriving at a convergence queue within a current adaptive period, and send the counted total amount of the services to the traffic predicting unit 402 when receiving an adaptive period ending signal sent by the edge convergence unit 401.

The traffic predicting unit 402 is adapted to obtain the total amount of the services within the current adaptive period from the traffic counting unit 403, calculate a predicted value of a total amount of the services arriving at the convergence queue within a next adaptive period, and send the predicted value of the total amount of the services to the edge convergence unit 401.

The edge convergence unit 401 is adapted to receive the predicted value of the total amount of the services from the traffic predicting unit 402, predict a length threshold of the convergence queue used in the next adaptive period, and trigger one convergence when a length of the convergence queue within the next adaptive period reaches the length threshold or no convergence has been triggered in the current period.

The edge convergence unit 401 includes a timer 407, a length threshold adaptive subunit 404, a queue length monitoring subunit 405, and a convergence triggering subunit 406.

The timer 407 is adapted to send a current period ending signal to the convergence triggering subunit 406 and reset its own timing value to be zero to restart timing when a timing value reaches a preset threshold adjustment period.

The length threshold adaptive subunit 404 is adapted to receive and store the predicted value of the total amount of the services arriving at the convergence queue within the next adaptive period, send a convergence queue length request signal to the queue length monitoring subunit 405, predict the length threshold of the convergence queue in the next adaptive period when receiving a length value of the current convergence queue from the queue length monitoring subunit 405, and send the predicted length threshold of the convergence queue to the queue length monitoring subunit 405.

The queue length monitoring subunit 405 is adapted to update the length threshold of the convergence queue when receiving the predicted length threshold of the convergence queue, monitor the length of the convergence queue in real time, send a convergence triggering signal to the convergence triggering subunit 406 when monitoring that the length of the convergence queue within the next adaptive period reaches the predicted length threshold of the convergence queue, and send the length of the current convergence queue to the length threshold adaptive subunit 404 when receiving the convergence queue length request signal from the length threshold adaptive subunit 404.

The convergence triggering subunit 406 is adapted to trigger one convergence when receiving the convergence triggering signal from the queue length monitoring subunit 405, or if no burst convergence is completed within the current period when receiving the current period ending signal from the timer 407.

The queue length monitoring subunit 405 includes a burst counter. The queue length monitoring subunit is adapted to add 1 to a counting value when the length monitoring subunit 405 generates the convergence triggering signal. The queue length monitoring subunit resets the counting value to be zero when the length monitoring subunit 405 receives the predicted length threshold of the convergence queue within the next adaptive period.

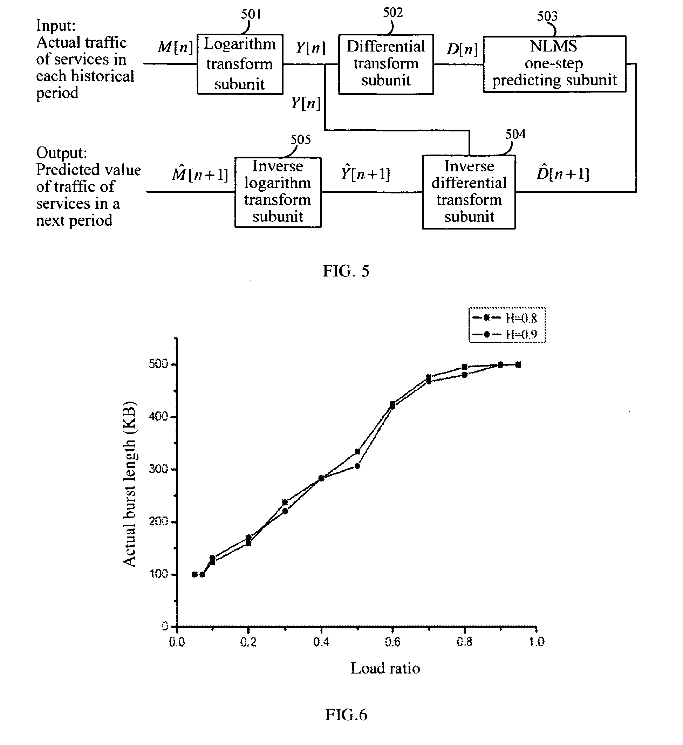

Referring to FIG. 5, the traffic predicting unit further includes a logarithm transform subunit 501, a differential transform subunit 502, an NLMS one-step predicting subunit 503, an inverse differential transform subunit 504, and an inverse logarithm transform subunit 505.

The logarithm transform subunit 501 is adapted to perform a logarithm transform on the received total amount of the services within the current adaptive period, and send a result of the logarithm transform of the amount of the services to the differential transform subunit 502.

The differential transform subunit 502 is adapted to perform a differential transform on the received result of the logarithm transform of the total amount of the services, and send a result of the differential transform to the NLMS one-step predicting subunit 503.

The NLMS one-step predicting subunit 503 is adapted to receive the result of the differential transform, calculate a predicted value of a result of a differential transform of the total amount of the services within the next adaptive period by using an NLMS algorithm, and send the predicted value to the inverse differential transform subunit 504.

The inverse differential transform subunit 504 is adapted to add the received result of the logarithm transform to the predicted value of the differential transform result, obtain a predicted value of a result of a logarithm transform of the total amount of the services within the next adaptive period, and send the predicted value of the logarithm transform result to the inverse logarithm transform subunit 505.

The inverse logarithm transform subunit 505 is adapted to perform an inverse logarithm transform on the received predicted value of the result of the logarithm transform result, and obtain a predicted value of the total amount of the services arriving at the convergence queue within the next adaptive period.

In the above traffic predicting unit, the logarithm transform subunit 501 may be replaced by an arc tangent transform subunit, the differential transform subunit 502 may be replaced by a relative differential transform unit, the inverse differential transform unit 504 may be replaced by an inverse relative differential transform unit, and the inverse logarithm transform subunit 505 may be replaced by a tangent transform subunit.

In order to verify the performance of the periodic adaptive convergence method based on traffic prediction provided by the present invention, the convergence process of an OBS network edge node is simulated on an OPNET software platform. A simulation model is based on the following assumptions:

(1) 40 self-similar service streams with the same statistic characteristics are adapted to simulate traditional electronic services connected to the OBS network edge node. Each service stream is corresponding to a special destination outlet address and a serving quality type, i.e., the service streams are arranged into different convergence queues after entering the edge node and wait for convergence. Each self-similar service stream is synthesized by superimposing 100 on-off sources. The on-off sources are characterized in that their state is alternated between an on state of sending data and an off state of not sending data. These sources generate packets at a fixed rate in the on state, and do not generate any packet in the off state. The duration of the on state and the duration of the off state are independent of each other, and both follow a pareto distribution. It is assumed that the length of the packets generated by the service streams all follow a uniform distribution from 1 KB to 2 KB. The average rate and burst degree of the self-similar service streams are respectively determined by a load ratio and Hurst parameter in a specific simulation experiment. The load ratio is defined as a ratio of a sum of the average rates of all the input service streams to a total output bandwidth. The Hurst parameter is called H parameter for short to scale the self-similarity degree of the service stream, $0.5<H<1$, and the closer the H is to 1, the higher the self-similarity degree and burst degree of service streams will be.

(2) An outlet link bandwidth of the edge node is 20 Gbps. The node includes 40 convergence queues respectively adapted to buffer and converge the 40 self-similar service streams connected thereto. The convergence of the packets in each convergence queue is controlled by an independent convergence module disposed therein. These modules all perform convergence according to the periodic adaptive convergence method based on traffic prediction provided by the present invention. The convergence process of the 40 queues is simulated, and their average performance is observed.

(3) Each convergence queue uses the same algorithm parameters. The specific parameters are set as follows. An order $P$ of a predictor is 4, a convergence coefficient $\mu$ is 1, and an initial value of a prediction coefficient vector $\overline{W}$ is (1,0,0,0). A maximum and minimum burst lengths $L_{max}$, $L_{min}$ are respectively 100 KB and 500 KB. An upper and lower determination thresholds $B_{max}$, $B_{min}$ of a burst demand are respectively 4.5 MB and 500 KB, and a threshold adjustment period T is 0.01 s.

(4) In order to simplify the simulation, an offset time between a burst data packet and its corresponding BHP may be preset as 0.

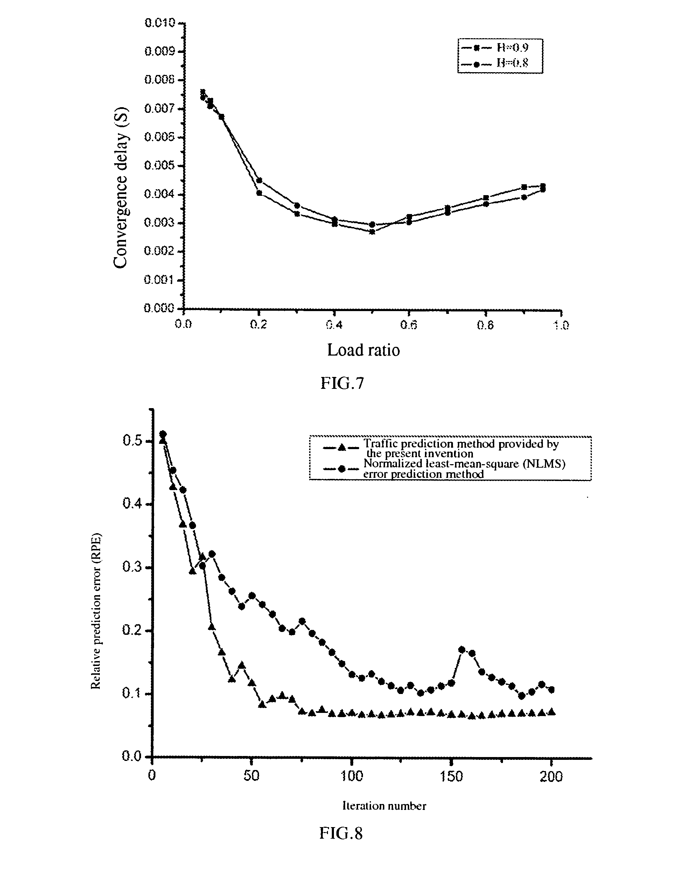

FIGs. 6 and 7 show verifications of the adaptability of the solutions provided by the present invention. The details are as follows.

FIG. 6 is a simulation diagram of a relation between an actual burst length and a load ratio under a convergence mechanism provided by the present invention. Seen from FIG. 6, no matter what the self-similarity degree of the input service stream is, the convergence method provided by the present invention may dynamically adjust the burst length according to the size of the currently connected load. When the load ratio is greater, as a larger length threshold is employed for convergence, the generated burst is longer. In this manner, the generation rate of the BHP is suppressed to some extent to avoid problems such as control channel congestion and great core node processing pressure caused by an excessively high BHP generation rate, thereby improving the blocking performance of the whole network. When the load ratio is lower, as a smaller length threshold is employed for convergence, the generated burst is shorter. In this manner, an excessively long convergence delay under a low load is avoided to meet a maximum delay requirement of the service stream. Moreover, the length threshold employed for convergence rises with the increase of the load, so that the adaptive manner provided by the present invention may stabilize the convergence delay to some extent. FIG. 7 is a simulation diagram of a relation between a packet convergence delay and a load ratio. Seen from FIG. 7, the convergence delay is not almost inversely proportional to the load ratio like in the convergence with a fixed length threshold, but is even smoother. In other words, the periodic adaptive strategy of the length threshold reduces the convergence delay jitter to some extent. In addition, though the convergence delay jitter is reduced, it still varies with the load ratio. Therefore, the generation of the burst is not periodic. This non-periodic burst generation manner facilitates the elimination of convergence synchronization of each edge node, thus reducing the probability of continuous blocking of burst in subsequent transmission.

Seen from FIGs. 5 and 6, the present invention achieves adaptability. The length threshold varies dynamically with the load connected, and this dynamical variation manner enable the congestion of the control channel under a high load to be alleviated, the processing load of the core node to be reduced, and the conflict probability of burst to be lowered. Besides, this dynamical variation manner may also ensure the maximum delay requirement of the service stream under a low load, and reduce the convergence delay jitter on the premise of avoiding convergence synchronization.

FIGs. 8, 9, and 10 show verifications of the performance of the traffic prediction method, i.e., the adaptive non-linear differential prediction method provided by the present invention. As this method is obtained by improving based on the NLMS algorithm, the performances of the two prediction methods are compared to illustrate the advantages of the traffic prediction method provided by the present invention.

The performance of the two prediction methods mainly includes convergence speed and prediction precision. First, a relative prediction error (RPE)

$$\mathrm{RPE} = \frac{1}{N} \sum_{n=1}^{N} \left| \frac{M[n] - \hat{M}[n]}{M[n]} \right|$$

is defined.

$M[n]$ is a total amount of the services in the nth period, $\hat{M}[n]$ is a predicted value of the total amount of the services in the nth period, and $N$ is iteration number. The prediction precision is scaled by the RPE in a steady state. The RPE in the steady state is a limit value obtained when $N \to \infty$, and it approximates an RPE value when the iteration number $N$ is large enough. The convergence speed is reflected by a relation that the RPE varies with the iteration number $N$.

The same parameters are preset for the two prediction methods, i.e., the prediction orders $p$ are both 4, the initial prediction coefficient vectors $\overline{W}$ are both (1,0,0,0), and the convergence coefficients $\mu$ are both 1.

FIG. 8 is a simulation diagram showing the relation that the RPE varies with the iteration number in the above two prediction methods, which reflects the convergence performances of the two methods. Seen from FIG. 8, the traffic prediction mechanism provided by the present invention has a faster convergence speed, i.e., requiring a fewer iteration numbers to achieve the same error level. Therefore, the convergence performance of the method provided herein is better than that of the NLMS algorithm.

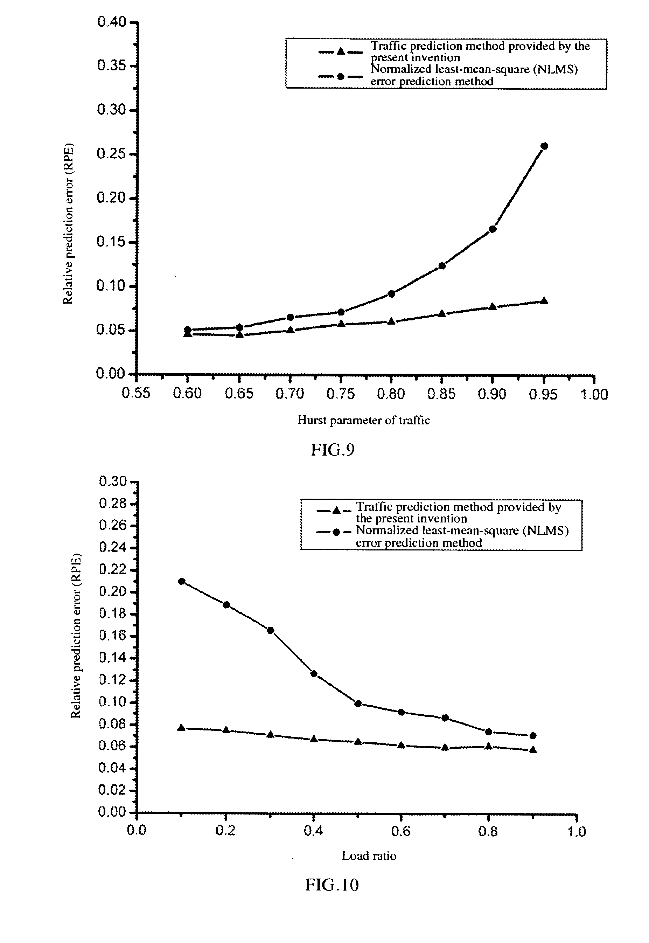

FIGs. 9 and 10 are simulation diagrams of prediction precisions of the above two prediction methods with different Hurst parameters and different load ratios, respectively. Referring to FIGs. 8 and 9, when the burst degree of the service stream is lower, i.e., the Hurst parameter is smaller and the load ratio is larger, the NLMS prediction method and the traffic prediction method provided by the present invention both can obtain a high prediction precision, i.e., a smaller RPE. However, when the burst performance of the service stream is stronger or the load ratio is lower, the problem of slow convergence of the NLMS algorithm becomes obvious, and its prediction precision decreases abruptly, while the traffic prediction method provided by the present invention still maintains an ideal prediction effect.

Seen from FIGs. 8, 9, and 10, the traffic prediction method provided by the present invention not only maintains the advantages of being real-time, on-line, and adaptive as the NLMS algorithm, but also improves its convergence performance by two proper pre-processing operations, thereby achieving a faster convergence speed and higher prediction precision. The advantages of the present invention are especially obvious in the prediction of a service stream with a high burst performance. In addition to its application in burst convergence to improve the threshold adaptive precision, the traffic prediction method provided by the present invention may also be used in various fields of traffic management such as connection control and bandwidth allocation, so as to better utilize the network resources.

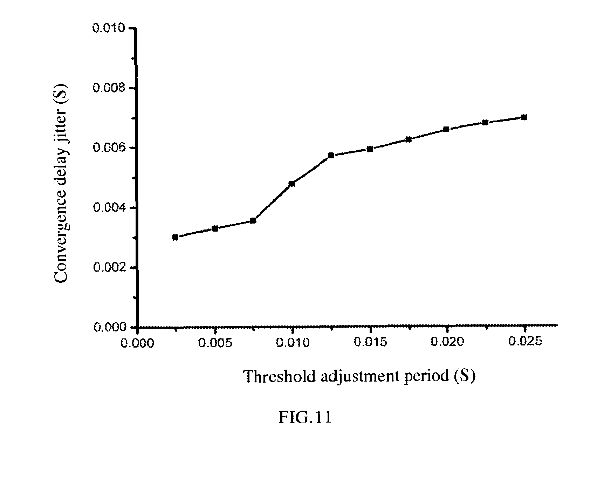

FIG. 11 is a simulation diagram of a relation between the threshold adjustment period and the convergence delay jitter. Seen from FIG. 11, the larger the threshold adjustment period is, the greater the convergence delay jitter will be, as the stabilization effect of the adaptive adjustment of the length threshold on the convergence delay is weaker because the threshold adjustment period is corresponding to the adaptive granularity of the convergence. The present invention realizes the controllability of adaptive granularity in a periodic adaptive manner, and the threshold adjustment period determines the frequency of adaptive adjustment on the length threshold, thereby determining the size of the adaptive granularity in convergence. In detail, if the preset threshold adjustment period is longer, the frequency of adaptive adjustment on the threshold is lower, i.e. the adaptive granularity used in convergence is larger. The result is that, as the frequency of threshold adjustment is lower, the adaptive overhead needed in a unit of time is smaller, and particularly the requirements of the hardware and cost are lower due to a smaller quantity of calculating operations. However, in another aspect, as the convergence queue employs the same length threshold in the same period, i.e., in a single period, the length threshold may be unable to be adaptively adjusted with the load. Thus a longer period means a lower adaptive precision and poorer convergence performance. Under this circumstance, an extreme situation is that, if the threshold adjustment period is set as infinite, the present invention is equivalent to the convergence method based on a fixed length threshold. Likewise, if the preset threshold adjustment period is shorter, the frequency of adaptive adjustment on the threshold is higher, i.e., the adaptive granularity used in convergence is smaller. Therefore, the adaptive overhead needed in a unit of time is larger, and particularly the requirements of the hardware and cost are higher due to a larger quantity of calculating operations. However, in another aspect, as the frequency of adaptive adjustment is higher, a corresponding adjustment may always be performed in time on the length threshold in the convergence according to the real-time characteristic of the current service stream, thereby achieving a stronger adaptability and better convergence performance.

In view of the above, through the periodic adaptive manner provided by the present invention, the adaptive granularity of convergence may be controlled in different threshold adjustment periods set by the user. Different adaptive granularities are corresponding to different convergence performances and implementing costs. In practice, the most appropriate adaptive granularity can be selected according to actual requirements, so as to realize an optimal compromise between cost and performance, which also reflects the flexibility of the present invention.

Detailed descriptions have been provided above on a periodic adaptive convergence method and system based on traffic prediction provided by the present invention. Though illustration and description of the present disclosure have been given with reference to embodiments thereof, it should be appreciated by persons of ordinary skill in the art that various changes in forms and details can be made without deviation from the scope of this disclosure, which are defined by the appended claims.

**Claims**

1. A service convergence method, comprising:

   receiving a total amount of packets arriving at a convergence queue within an adaptive period, and calculating a predicted value of a total amount of the packets arriving at the convergence queue within a next adaptive period; reading a length of the convergence queue, and adding the length of the convergence queue to the predicted value of the total amount of the packets to obtain an estimated burst demand of the next adaptive period; and predicting a length threshold of the convergence queue within the next adaptive period according to a preset burst demand determination threshold and the estimated burst demand, and assembling all packets in the convergence queue into a burst to be sent out when the length of the convergence queue within the next adaptive period reaches the length threshold or no burst has been assembled within the current adaptive period, in each adaptive period, the convergence queue always adopts the length threshold corresponding to the adaptive period to assemble all packets in the convergence queue into a burst to be sent out; wherein the predicting the length threshold of the convergence queue within the next adaptive period according to the preset burst demand determination threshold and the estimated burst demand comprises the following manners:

   setting the length threshold of the next adaptive period to a permitted minimum burst length if the estimated burst demand is smaller than a preset lower determination threshold of the burst demand; setting the length threshold of the next adaptive period to a permitted maximum burst length if the estimated burst demand is greater than preset upper determination threshold of the burst demand; and when the estimated burst demand falls between the preset lower determination threshold and the preset upper determination threshold of the burst demand, calculating the length threshold of the next adaptive period in the manner of: obtaining a ratio of the difference between permitted the maximum burst length and permitted the minimum burst length to the difference between the preset upper determination threshold and the preset lower determination threshold of the burst demand, then multiplying the ratio with the difference between the estimated burst demand and the preset lower determination threshold of the burst demand, and adding the result of multiplying to the permitted minimum burst length.

2. The method according to claim 1, wherein the calculating the predicted value of the total amount of the packets arriving at the convergence queue within the next adaptive period comprises:

   performing a logarithm transform on the total amount of the packets arriving at the convergence queue within the adaptive period, then performing a first-order differential transform on a result of the logarithm transform, and calculating a predicted value of a result of a differential transform of the total amount of the packets within the next adaptive period by using a normalized least-mean-square, NLMS, algorithm; and adding the predicted value of the result of the differential transform of the total amount of the packets to the result of the logarithm transform of the total amount of the packets, obtaining a predicted value of a result of a logarithm transform of the total amount of the packets within the next adaptive period, and performing an inverse logarithm transform to obtain the predicted value of the total amount of the packets within the next adaptive period.

3. The method according to claim 1, wherein the calculating the predicted value of the total amount of the packets arriving at the convergence queue within the next adaptive period comprises:

   performing an arc tangent transform on the total amount of the packets arriving at the convergence queue within the adaptive period, then performing a first-order differential transform on a result of the arc tangent transform, and calculating a predicted value of a result of a relative differential transform of the total amount of packets within the next adaptive period by using an NLMS algorithm; and adding the predicted value of the result of the relative differential transform to the result of the arc tangent transform of the total amount of the packets, obtaining a predicted value of a result of an arc tangent transform of the total amount of the packets within the next adaptive period, and performing a tangent transform to obtain the predicted value of the total amount of the packets within the next adaptive period.

4. The method according to claim 1, wherein before receiving the total amount of the packets arriving at the convergence queue within the adaptive period, the method further comprises:

when a timing value reaches the adaptive period, triggering one convergence, and then resetting the timing value to be zero to restart timing.

5. The method according to claim 1, wherein after predicting the length threshold of the convergence queue within the next adaptive period, the method further comprises:

updating a period number of the adaptive period.

6. A service convergence system, comprising:

a traffic counting unit, adapted to count a total amount of packets arriving at a convergence queue within an adaptive period, and send the total amount of the packets when receiving an adaptive period ending signal sent by an edge convergence unit;

a traffic predicting unit, adapted to receive the total amount of the packets sent by the traffic counting unit, calculate a predicted value of a total amount of the packets arriving at the convergence queue within a next adaptive period, and send the predicted value; and

the edge convergence unit, adapted to receive the predicted value from the traffic predicting unit, read a length of the convergence queue, add the length of the convergence queue to the predicted value to obtain an estimated burst demand of the next adaptive period, predict a length threshold of the convergence queue within the next adaptive period according to a preset burst demand determination threshold and the estimated burst demand, and assemble all packets in the convergence queue into a burst to be sent out when a length of the convergence queue within the next adaptive period reaches the length threshold or no burst has been assembled within the current adaptive period, in each adaptive period, the convergence queue always adopts the length threshold corresponding to the adaptive period to assemble all packets in the convergence queue into a burst to be sent out. wherein the edge convergence unit comprises:

a timer, adapted to send a period ending signal to a convergence triggering subunit and reset its own timing value to be zero to restart timing when the timing value reaches a preset threshold adjustment period;

a length threshold adaptive subunit, adapted to receive and store the predicted value of the total amount of the packets arriving at the convergence queue within the next adaptive period, send a convergence queue length request signal to a queue length monitoring subunit, predict the length threshold in the next adaptive period when receiving a length value of the current convergence queue, and send the predicted length threshold of the convergence queue to the queue length monitoring subunit, use the following manners to predict the length threshold in the next adaptive period: set the length threshold of the next adaptive period to a permitted minimum burst length if the estimated burst demand is smaller than a preset lower determination threshold of the burst demand, set the length threshold of the next adaptive period to a permitted maximum burst length if the estimated burst demand is greater than a preset upper determination threshold of the burst demand; and when the estimated burst demand falls between the preset lower determination threshold and the preset upper determination threshold of the burst demand, calculate the length threshold of the next adaptive period in the manner of: obtain a ratio of the difference between permitted the maximum burst length and permitted the minimum burst length the difference between the preset upper determination threshold and the preset lower determination threshold of the burst demand, then multiply the ratio with the difference between the estimated burst demand and the preset lower determination threshold of the burst demand, and add the result of multiplying to the permitted minimum burst length;

the queue length monitoring subunit, adapted to update the length threshold of the convergence queue when receiving the predicted length threshold of the convergence queue, send a convergence triggering signal to a convergence triggering subunit when monitoring that the length of the convergence queue reaches the predicted length threshold of the convergence queue, and send the length of the convergence queue to the length threshold adaptive subunit when receiving the convergence queue length request signal; and

the convergence triggering subunit, adapted to trigger one convergence when receiving the convergence triggering signal sent by the queue length monitoring subunit or if no burst convergence has been completed within the period when receiving the period ending signal sent by the timer.

7. The system according to claim 6, wherein the queue length monitoring subunit comprises a burst counter, adapted to add 1 to a counting value thereof when the queue length monitoring subunit generates the convergence triggering signal, and reset the counting value to be zero when receiving the predicted length threshold of the convergence queue within the next adaptive period.

8. The system according to claim 6, wherein the traffic predicting unit comprises:

a logarithm transform subunit, adapted to perform a logarithm transform on the received total amount of the packets within the adaptive period;
a differential transform subunit, adapted to perform a differential transform on a received result of the logarithm transform result sent by the logarithm transform subunit;
a normalized least-mean-square NLMS one-step predicting subunit, adapted to receive a result of the differential transform sent by the differential transform subunit, calculate a predicted value of a result of a differential transform of the total amount of the packets within the next adaptive period by using an NLMS algorithm, and send the predicted value to an inverse differential transform subunit;
the inverse differential transform subunit, adapted to receive the predicted value sent by the NLMS one-step predicting subunit and the result of the logarithm transform sent by the logarithm transform subunit, add the result of the logarithm transform to the predicted value, and obtain a predicted value of a result of a logarithm transform of the total amount of the packets within the next adaptive period; and
an inverse logarithm transform subunit, adapted to perform an inverse logarithm transform on the received predicted value of the result of the logarithm transform sent by the inverse differential transform subunit, and obtain the predicted value of the total amount of the packets arriving at the convergence queue within the next adaptive period.

9. The system according to claim 6, wherein the traffic predicting unit comprises:

an arc tangent transform subunit, adapted to perform an arc tangent transform on the received total amount of the packets within the adaptive period;
a relative differential transform subunit, adapted to perform a relative differential transform on a received result of the arc tangent transform sent by the arc tangent transform subunit;
an NLMS one-step predicting subunit, adapted to receive a result of the relative differential transform sent by the relative differential transform subunit, and calculate a predicted value of the result of the relative differential transform of the total amount of the packets within the next adaptive period by using an NLMS algorithm;
an inverse relative differential transform subunit, adapted to receive the predicted value of the result of the relative differential transform sent by the NLMS one-step predicting subunit and the result of the arc tangent transform sent by the arc tangent transform subunit, process the predicted value of the result of the relative differential transform and the result of the arc tangent transform, and obtain a predicted value of a result of an arc tangent transform of the total amount of the packets within the next adaptive period; and
a tangent transform subunit, adapted to perform a tangent transform on the received predicted value of the result of the arc tangent transform sent by the inverse relative differential transform subunit, and obtain the predicted value of the total amount of the packets arriving at the convergence queue within the next adaptive period.

## Patentansprüche

1. Dienstkonvergenzverfahren, das Folgendes umfasst:

Empfangen einer Gesamtmenge von Paketen, die innerhalb einer adaptiven Periode an einer Konvergenzwarteschlange ankommen, und Berechnen eines vorhergesagten Wertes einer Gesamtmenge der Pakete, die innerhalb einer nächsten adaptiven Periode an der Konvergenzwarteschlange ankommen;
Lesen einer Länge der Konvergenzwarteschlange und Hinzufügen der Länge der Konvergenzwarteschlange zu dem vorhergesagten Wert der Gesamtmenge der Pakete, um einen geschätzten Burst-Bedarf der nächsten adaptiven Periode zu erhalten; und
Vorhersagen eines Längenschwellenwertes der Konvergenzwarteschlange innerhalb der nächsten adaptiven Periode in Übereinstimmung mit einem vorgegebenen Burst-Bedarf-Bestimmungsschwellenwert und dem geschätzten Burst-Bedarf und

Zusammenstellen aller Pakete in der Konvergenzwarteschlange in einem Burst, der auszusenden ist, wenn die Länge der Konvergenzwarteschlange innerhalb der nächsten adaptiven Periode den Längenschwellenwert erreicht oder in der momentanen adaptiven Periode kein Burst zusammengestellt worden ist, wobei in jeder adaptiven Periode die Konvergenzwarteschlange immer den Längenschwellenwert anwendet, der der adaptiven Periode entspricht, um alle Pakete in der Konvergenzwarteschlange in einem auszusendenden Burst zusammenzustellen;

wobei das Vorhersagen des Längenschwellenwertes der Konvergenzwarteschlange innerhalb der nächsten adaptiven Periode in Übereinstimmung mit dem vorgegebenen Burst-Bedarf-Bestimmungsschwellenwert und dem geschätzten Burst-Bedarf die folgenden Arten umfasst:

Setzen des Längenschwellenwertes der nächsten adaptiven Periode auf eine erlaubte minimale Burst-Länge, falls der geschätzte Burst-Bedarf kleiner als ein vorgegebener unterer Bestimmungsschwellenwert des Burst-Bedarfs ist;

Setzen des Längenschwellenwertes der nächsten adaptiven Periode auf eine erlaubte maximale Burst-Länge, falls der geschätzte Burst-Bedarf größer als ein vorgegebener oberer Bestimmungsschwellenwert des Burst-Bedarfs ist; und

wenn der geschätzte Burst-Bedarf zwischen den vorgegebenen unteren Bestimmungsschwellenwert und den vorgegebenen oberen Bestimmungsschwellenwert des Burst-Bedarfs fällt, Berechnen des Längenschwellenwertes der nächsten adaptiven Periode auf die folgende Art:

Erhalten eines Verhältnisses des Unterschieds zwischen der erlaubten maximalen Burst-Länge und der erlaubten minimalen Burst-Länge zu dem Unterschied zwischen dem vorgegebenen oberen Bestimmungsschwellenwert und dem vorgegebenen unteren Bestimmungsschwellenwert des Burst-Bedarfs, dann Multiplizieren des Verhältnisses mit dem Unterschied zwischen dem geschätzten Burst-Bedarf und dem vorgegebenen unteren Bestimmungsschwellenwert des Burst-Bedarfs und

Hinzufügen des Ergebnisses des Multiplizierens zu der erlaubten minimalen Burst-Länge.

2. Verfahren nach Anspruch 1, wobei das Berechnen des vorhergesagten Werts der Gesamtmenge der Pakete, die innerhalb der nächsten adaptiven Periode an der Konvergenzwarteschlange ankommen, Folgendes umfasst:

Ausführen einer logarithmischen Transformation an der Gesamtmenge der Pakete, die innerhalb der adaptiven Periode an der Konvergenzwarteschlange ankommen, dann Ausführen einer Differentialtransformation erster Ordnung an einem Ergebnis der logarithmischen Transformation und Berechnen eines vorhergesagten Werts eines Ergebnisses einer Differentialtransformation der Gesamtmenge der Pakete innerhalb der nächsten adaptiven Periode unter Verwendung eines Algorithmus normierter kleinster mittlerer Quadrate, NLMS-Algorithmus; und

Hinzufügen des vorhergesagten Wertes des Ergebnisses der Differentialtransformation der Gesamtmenge der Pakete zu dem Ergebnis der logarithmischen Transformation der Gesamtmenge der Pakete, Erhalten eines vorhergesagten Wertes eines Ergebnisses einer logarithmischen Transformation der Gesamtmenge der Pakete innerhalb der nächsten adaptiven Periode und Ausführen einer inversen logarithmischen Transformation, um den vorhergesagten Wert der Gesamtmenge der Pakete innerhalb der nächsten adaptiven Periode zu erhalten.

3. Verfahren nach Anspruch 1, wobei das Berechnen des vorhergesagten Wertes der Gesamtmenge der Pakete, die innerhalb der nächsten adaptiven Periode an der Konvergenzwarteschlange ankommen, Folgendes umfasst:

Ausführen einer Arkustangens-Transformation an der Gesamtmenge der Pakete, die innerhalb der adaptiven Periode an der Konvergenzwarteschlange ankommen, dann Ausführen einer Differentialtransformation erster Ordnung an einem Ergebnis der Arkustangens-Transformation und Berechnen eines vorhergesagten Wertes eines Ergebnisses einer relativen Differentialtransformation der Gesamtmenge der Pakete innerhalb der nächsten adaptiven Periode unter Verwendung eines NLMS-Algorithmus; und

Hinzufügen des vorhergesagten Wertes des Ergebnisses der relativen Differentialtransformation zu dem Ergebnis der Arkustangens-Transformation der Gesamtmenge der Pakete, Erhalten eines vorhergesagten Wertes eines Ergebnisses einer Arkustangens-Transformation der Gesamtmenge der Pakete innerhalb der nächsten adaptiven Periode und Ausführen einer Tangenstransformation, um den vorhergesagten Wert der Gesamtmenge der Pakete innerhalb der nächsten adaptiven Periode zu erhalten.

4. Verfahren nach Anspruch 1, wobei vor dem Empfangen der Gesamtmenge der Pakete, die innerhalb der adaptiven Periode an der Konvergenzwarteschlange ankommen, das Verfahren ferner Folgendes umfasst:

wenn ein Zeitsteuerungswert die adaptive Periode erreicht, Auslösen einer Konvergenz und dann Zurücksetzen des Zeitsteuerungswertes auf null, um die Zeitsteuerung neu zu starten.

5. Verfahren nach Anspruch 1, wobei nach dem Vorhersagen des Längenschwellenwertes der Konvergenzwarteschlange innerhalb der nächsten adaptiven Periode das Verfahren ferner Folgendes umfasst:

Aktualisieren einer Periodenzahl der adaptiven Periode.

6. Dienstkonvergenzsystem, das Folgendes umfasst:

eine Verkehrszähleinheit, die dafür ausgelegt ist, eine Gesamtmenge von Paketen, die innerhalb einer adaptiven Periode an einer Konvergenzwarteschlange ankommen, zu zählen und die Gesamtmenge der Pakete zu senden, wenn sie ein von einer Randkonvergenzeinheit gesendetes Endsignal der adaptiven Periode empfängt;
eine Verkehrsvorhersageeinheit, die dafür ausgelegt ist, die Gesamtmenge der Pakete, die von der Verkehrszähleinheit gesendet wird, zu empfangen, einen vorhergesagten Wert einer Gesamtmenge der Pakete, die innerhalb einer nächsten adaptiven Periode an der Konvergenzwarteschlange ankommen, zu berechnen und den vorhergesagten Wert zu senden; und
die Randkonvergenzeinheit, die dafür ausgelegt ist, den vorhergesagten Wert von der Verkehrsvorhersageeinheit zu empfangen, eine Länge der Konvergenzwarteschlange zu lesen, die Länge der Konvergenzwarteschlange zu dem vorhergesagten Wert hinzuzufügen, um einen geschätzten Burst-Bedarf der nächsten adaptiven Periode zu erhalten, einen Längenschwellenwert der Konvergenzwarteschlange innerhalb der nächsten adaptiven Periode in Übereinstimmung mit einem vorgegebenen Burst-Bedarf-Bestimmungsschwellenwert und dem geschätzten Burst-Bedarf vorherzusagen und alle Pakete in der Konvergenzwarteschlange in einem Burst, der auszusenden ist, wenn eine Länge der Konvergenzwarteschlange innerhalb der nächsten adaptiven Periode den Längenschwellenwert erreicht oder in der momentanen adaptiven Periode kein Burst zusammengestellt worden ist, zusammenzustellen, wobei in jeder adaptiven Periode die Konvergenzwarteschlange immer den Längenschwellenwert anwendet, der der adaptiven Periode entspricht, um alle Pakete in der Konvergenzwarteschlange in einem auszusendenden Burst zusammenzustellen,
wobei die Randkonvergenzeinheit Folgendes umfasst:

einen Zeitgeber, der dafür ausgelegt ist, ein Periodenendsignal an eine Konvergenzauslöse-Untereinheit zu senden und seinen eigenen Zeitsteuerungswert auf null zurückzusetzen, um die Zeitsteuerung neu zu starten, wenn der Zeitsteuerungswert eine vorgegebene Schwellenwert-Einstellperiode erreicht;
eine adaptive Längenschwellenwert-Untereinheit, die dafür ausgelegt ist, den vorhergesagten Wert der Gesamtmenge der Pakete, die innerhalb der nächsten adaptiven Periode an der Konvergenzwarteschlange ankommen, zu empfangen und
zu speichern, ein Konvergenzwarteschlangenlängen-Anforderungssignal an eine Warteschlangenlängen-Überwachungsuntereinheit zu senden, den Längenschwellenwert in der nächsten adaptiven Periode vorherzusagen, wenn sie einen Längenwert der momentanen Konvergenzwarteschlange empfängt, und den vorhergesagten Längenschwellenwert der Konvergenzwarteschlange an die Warteschlangenlängen-Überwachungsuntereinheit zu senden, und die folgenden Arten zu verwenden, um den Längenschwellenwert in der nächsten adaptiven Periode vorherzusagen: Setzen des Längenschwellenwertes der nächsten adaptiven Periode auf eine erlaubte minimale Burst-Länge, falls der geschätzte Burst-Bedarf kleiner als ein vorgegebener unterer Bestimmungsschwellenwert des Burst-Bedarfs ist; Setzen des Längenschwellenwertes der nächsten adaptiven Periode auf eine erlaubte maximale Burst-Länge, falls der geschätzte Burst-Bedarf größer als ein vorgegebener oberer Bestimmungsschwellenwert des Burst-Bedarfs ist; und wenn der geschätzte Burst-Bedarf zwischen den vorgegebenen unteren Bestimmungsschwellenwert und den vorgegebenen oberen Bestimmungsschwellenwert des Burst-Bedarfs fällt,
Berechnen des Längenschwellenwertes der nächsten adaptiven Periode auf die folgende Art: Erhalten eines Verhältnisses des Unterschieds zwischen der erlaubten maximalen Burst-Länge und der erlaubten minimalen Burst-Länge zu dem Unterschied zwischen dem vorgegebenen oberen Bestimmungsschwellenwert und
dem vorgegebenen unteren Bestimmungsschwellenwert des Burst-Bedarfs, dann Multiplizieren des Verhältnisses mit dem Unterschied zwischen dem geschätzten Burst-Bedarf und dem vorgegebenen unteren Bestimmungsschwellenwert des Burst-Bedarfs und Hinzufügen des Ergebnisses des Multiplizierens zu der erlaubten minimalen Burst-Länge;

die Warteschlangenlängen-Überwachungsuntereinheit, die dafür ausgelegt ist, den Längenschwellenwert der Konvergenzwarteschlange zu aktualisieren, wenn sie den vorhergesagten Längenschwellenwert der Konvergenzwarteschlange empfängt, ein Konvergenz-Auslösesignal an eine Konvergenzauslöse-Untereinheit zu senden, wenn sie überwacht, dass die Länge der Konvergenzwarteschlange den vorhergesagten Längenschwellenwert der Konvergenzwarteschlange erreicht, und die Länge der Konvergenzwarteschlange an die adaptive Längenschwellenwert-Untereinheit zu senden, wenn sie das Konvergenzwarteschlangenlängen-Anforderungssignal empfängt; und

die Konvergenzauslöse-Untereinheit, die dafür ausgelegt ist, eine Konvergenz auszulösen, wenn sie das von der Warteschlangenlängen-Überwachungsuntereinheit gesendete Konvergenz-Auslösesignal empfängt oder falls innerhalb der Periode keine Burst-Konvergenz abgeschlossen worden ist, wenn sie das von dem Zeitgeber gesendete Periodenendsignal empfängt.

7. System nach Anspruch 6, wobei die Warteschlangenlängen-Überwachungsuntereinheit einen Burst-Zähler umfasst, der dafür ausgelegt ist, 1 zu seinem Zählwert hinzuzufügen, wenn die Warteschlangenlängen-Überwachungsuntereinheit das Konvergenz-Auslösesignal erzeugt, und den Zählwert auf null zurückzusetzen, wenn er den vorhergesagten Längenschwellenwert der Konvergenzwarteschlange innerhalb der nächsten adaptiven Periode empfängt.

8. System nach Anspruch 6, wobei die Verkehrsvorhersageeinheit Folgendes umfasst:

eine Untereinheit für eine logarithmische Transformation, die dafür ausgelegt ist, an der innerhalb der adaptiven Periode empfangenen Gesamtmenge der Pakete eine logarithmische Transformation auszuführen;

eine Differentialtransformations-Untereinheit, die dafür ausgelegt ist, an einem empfangenen Ergebnis des Ergebnisses der logarithmischen Transformation, das von der Untereinheit für eine logarithmische Transformation gesendet wird, eine Differentialtransformation auszuführen;

eine Einschritt-Vorhersageuntereinheit normierter kleinster mittlerer Quadrate, NLMS-Einschritt-Vorhersageuntereinheit, die dafür ausgelegt ist, ein von der Differentialtransformations-Untereinheit gesendetes Ergebnis der Differentialtransformation zu empfangen, einen vorhergesagten Wert eines Ergebnisses einer Differentialtransformation der Gesamtmenge der Pakete innerhalb der nächsten adaptiven Periode unter Verwendung eines NLMS-Algorithmus zu berechnen und den vorhergesagten Wert an eine Untereinheit für eine inverse Differentialtransformation zu senden;

die Untereinheit für eine inverse Differentialtransformation, die dafür ausgelegt ist,

den von der NLMS-Einschritt-Vorhersageuntereinheit gesendeten vorhergesagten Wert und das von der Untereinheit für eine logarithmische Transformation gesendete Ergebnis der logarithmischen Transformation zu empfangen, das Ergebnis der logarithmischen Transformation zu dem vorhergesagten Wert hinzuzufügen und einen vorhergesagten Wert eines Ergebnisses einer logarithmischen Transformation der Gesamtmenge der Pakete innerhalb der nächsten adaptiven Periode zu erhalten; und

eine Untereinheit für eine inverse logarithmische Transformation, die dafür ausgelegt ist, eine inverse logarithmische Transformation an dem empfangenen vorhergesagten Wert des Ergebnisses der logarithmischen Transformation, der von der Untereinheit für eine inverse Differentialtransformation gesendet wird, auszuführen und den vorhergesagten Wert der Gesamtmenge der Pakete, die innerhalb der nächsten adaptiven Periode an der Konvergenzwarteschlange ankommen, zu erhalten.

9. System nach Anspruch 6, wobei die Verkehrsvorhersageeinheit Folgendes umfasst:

eine Arkustangens-Transformations-Untereinheit, die dafür ausgelegt ist, eine Arkustangens-Transformation an der empfangenen Gesamtmenge der Pakete innerhalb der adaptiven Periode auszuführen;

eine Untereinheit für eine relative Differentialtransformation, die dafür ausgelegt ist,

eine relative Differentialtransformation an einem empfangenen Ergebnis der Arkustangens-Transformation, das von der Arkustangens-Transformations-Untereinheit gesendet wird, auszuführen;

eine NLMS-Einschritt-Vorhersageuntereinheit, die dafür ausgelegt ist, ein von der Untereinheit für eine relative Differentialtransformation gesendetes Ergebnis der relativen Differentialtransformation zu empfangen und einen vorhergesagten Wert des Ergebnisses der relativen Differentialtransformation der Gesamtmenge der Pakete innerhalb der nächsten adaptiven Periode unter Verwendung eines NLMS-Algorithmus zu berechnen;

eine Untereinheit für eine inverse relative Differentialtransformation, die dafür ausgelegt ist, den von der NLMS-Einschritt-Vorhersageuntereinheit gesendeten vorhergesagten Wert des Ergebnisses der relativen Differentialtransformation und

das von der Arkustangens-Transformations-Untereinheit gesendete Ergebnis der Arkustangens-Transformation zu empfangen, den vorhergesagten Wert des Ergebnisses der relativen Differentialtransformation und das Ergebnis der Arkustangens-Transformation zu verarbeiten und einen vorhergesagten Wert eines Ergebnisses einer Arkustangens-Transformation der Gesamtmenge der Pakete innerhalb der nächsten adaptiven Periode zu erhalten; und

eine Tangens-Transformations-Untereinheit, die dafür ausgelegt ist, an dem empfangenen vorhergesagten Wert des Ergebnisses der Arkustangens-Transformation, der von der Untereinheit für eine inverse relative Differentialtransformation gesendet wird, eine Tangens-Transformation auszuführen und den vorhergesagten Wert der Gesamtmenge der Pakete, die innerhalb der nächsten adaptiven Periode an der Konvergenzwarteschlange ankommen, zu erhalten.

**Revendications**

1. Procédé de convergence de service, comprenant :

   la réception d'une quantité totale de paquets arrivant au niveau d'une file d'attente de convergence dans une période adaptative, et le calcul d'une valeur prédite d'une quantité totale de paquets arrivant au niveau de la file d'attente de convergence dans une période adaptative suivante ;

   la lecture d'une longueur de la file d'attente de convergence, et l'ajout de la longueur de la file d'attente de convergence à la valeur prédite de la quantité totale de paquets afin d'obtenir une demande de salve estimée de la période adaptative suivante ; et

   la prédiction d'un seuil de longueur de la file d'attente de convergence dans la période adaptative suivante en fonction d'un seuil de détermination de demande de salve préétabli et de la demande de salve estimée, et l'assemblage de tous les paquets dans la file d'attente de convergence en une salve à envoyer en sortie quand la longueur de la file d'attente de convergence dans la période adaptative suivante atteint le seuil de longueur ou quand aucune salve n'a été assemblée dans la période adaptative courante, dans chaque période adaptative, la file d'attente de convergence adopte toujours le seuil de longueur correspondant à la période adaptative afin d'assembler tous les paquets dans la file d'attente de convergence en une salve à envoyer en sortie ;

   dans lequel la prédiction du seuil de longueur de la file d'attente de convergence dans la période adaptative suivante en fonction du seuil de détermination de demande de salve préétabli et de la demande de salve estimée est réalisée selon les modes suivants :

      en réglant le seuil de longueur de la période adaptative suivante à une longueur de salve minimum permise si la demande de salve estimée est inférieure à un seuil de détermination inférieur préétabli de la demande de salve ;

      en réglant le seuil de longueur de la période adaptative suivante à une longueur de salve maximum permise si la demande de salve estimée est supérieure à un seuil de détermination supérieur préétabli de la demande de salve ; et

      quand la demande de salve estimée chute entre le seuil de détermination inférieur préétabli et le seuil de détermination supérieur préétabli de la demande de salve préétablie, le calcul du seuil de longueur de la période adaptative suivante en :

   obtenant un rapport de la différence entre la longueur de salve maximum permise et la longueur de salve minimum permise sur la différence entre le seuil de détermination supérieur préétabli et le seuil de détermination inférieur préétabli de la demande de salve permise, puis en multipliant le rapport avec la différence entre la demande de salve estimée et le seuil de détermination inférieur préétabli de la demande de salve permise, et en ajoutant le résultat de la multiplication à la longueur de salve minimum permise.

2. Procédé selon la revendication 1, dans lequel le calcul de la valeur prédite de la quantité totale de paquets arrivant au niveau de la file d'attente de convergence dans la période adaptative suivante comprend :

   l'exécution d'une transformation logarithmique sur la quantité totale de paquets arrivant au niveau de la file d'attente de convergence dans la période adaptative, puis l'exécution d'une transformation différentielle de premier ordre sur un résultat de la transformation logarithmique, et le calcul d'une valeur prédite d'un résultat d'une transformation différentielle de la quantité totale de paquets dans la période adaptative suivante en utilisant un algorithme par les moindres carrés normalisé, NLMS ; et

l'ajout de la valeur prédite du résultat de la transformation différentielle de la quantité totale de paquets au résultat de la transformation logarithmique de la quantité totale de paquets, l'obtention d'une valeur prédite d'un résultat d'une transformation logarithmique de la quantité totale de paquets dans la période adaptative suivante, et

l'exécution d'une transformation logarithmique inverse afin d'obtenir la valeur prédite de la quantité totale de paquets dans la période adaptative suivante.

3. Procédé selon la revendication 1, dans lequel le calcul de la valeur prédite de la quantité totale de paquets arrivant au niveau de la file d'attente de convergence dans la période adaptative suivante comprend :

l'exécution d'une transformation arc tangente sur la quantité totale de paquets arrivant au niveau de la file d'attente de convergence dans la période adaptative, puis l'exécution d'une transformation différentielle de premier ordre sur un résultat de la transformation arc tangente, et le calcul d'une valeur prédite d'un résultat d'une transformation différentielle relative de la quantité totale de paquets dans la période adaptative suivante en utilisant un algorithme NLMS ; et

l'ajout de la valeur prédite du résultat de la transformation différentielle relative au résultat de la transformation arc tangente de la quantité totale de paquets, l'obtention d'une valeur prédite d'un résultat de la transformation arc tangente de la quantité totale de paquets dans la période adaptative suivante, et l'exécution d'une transformation tangente afin d'obtenir la valeur prédite de la quantité totale de paquets dans la période adaptative suivante.

4. Procédé selon la revendication 1, comprenant en outre, avant la réception de la quantité totale de paquets arrivant au niveau de la file d'attente de convergence dans la période adaptative :

quand une valeur de temporisation atteint la période adaptative, le déclenchement d'une convergence, puis la remise à zéro de la valeur de temporisation afin de relancer la temporisation.

5. Procédé selon la revendication 1, comprenant en outre après la prédiction du seuil de longueur de la file d'attente de convergence dans la période adaptative suivante :

l'actualisation d'un numéro de période de la période adaptative.

6. Système de convergence de service, comprenant :

une unité de comptabilisation de trafic, adaptée pour compter une quantité totale de paquets arrivant au niveau d'une file d'attente de convergence dans une période adaptative, et envoyer la quantité totale de paquets à la réception d'un signal de fin de période adaptative envoyé par une unité de convergence limitrophe ;

une unité de prédiction de trafic, adaptée pour recevoir la quantité totale de paquets envoyés par l'unité de comptabilisation de trafic, calculer une valeur prédite d'une quantité totale de paquets arrivant au niveau de la file d'attente de convergence dans une période adaptative suivante, et envoyer la valeur prédite ; et

l'unité de convergence limitrophe, adaptée pour recevoir la valeur prédite depuis l'unité de prédiction de trafic, lire une longueur de la file d'attente de convergence,

ajouter la longueur de la file d'attente de convergence à la valeur prédite afin d'obtenir une demande de salve estimée de la période adaptative suivante, prédire un seuil de longueur de la file d'attente de convergence dans la période adaptative suivante en fonction d'un seuil de détermination de demande de salve préétabli et de la demande de salve estimée, et assembler tous les paquets dans la file d'attente de convergence en une salve à envoyer en sortie quand une longueur de la file d'attente de convergence dans la période adaptative suivante atteint le seuil de longueur ou

quand aucune salve n'a été assemblée dans la période adaptative courante, dans chaque période adaptative, la file d'attente de convergence adopte toujours le seuil de longueur correspondant à la période adaptative afin d'assembler tous les paquets dans la file d'attente de convergence en une salve à envoyer en sortie ;

dans lequel l'unité de convergence limitrophe comprend :

un temporisateur, adapté pour envoyer un signal de fin de période à une sous-unité de déclenchement de convergence et remettre à zéro sa propre valeur de temporisation afin de relancer la temporisation quand la valeur de temporisation atteint une période de réglage de seuil préétablie ;

une sous-unité adaptative de seuil de longueur, adaptée pour recevoir et mémoriser la valeur prédite de la quantité totale de paquets arrivant au niveau de la file d'attente de convergence dans la période adaptative suivante, envoyer un signal de requête de longueur de file d'attente de convergence à une sous-unité de surveillance de longueur de file d'attente, prédire le seuil de longueur dans la période adaptative suivante à la réception d'une valeur de longueur de la file d'attente de convergence courante, et envoyer le seuil de longueur prédit de la file d'attente de convergence à la sous-unité de surveillance de longueur de file d'attente, utiliser les modes suivants pour prédire le seuil de longueur dans la période adaptative suivante : en réglant le seuil de longueur de la période adaptative suivante à une longueur de salve minimum permise si la demande de salve estimée est inférieure à un seuil de détermination inférieur préétabli de la demande de salve ; en réglant le seuil de longueur de la période adaptative suivante à une longueur de salve maximum permise si la demande de salve estimée est supérieure à un seuil de détermination supérieur préétabli de la demande de salve ; et quand la demande de salve estimée chute entre le seuil de détermination inférieur préétabli et le seuil de détermination supérieur préétabli de la demande de salve, calculer le seuil de longueur de la période adaptative suivante : en obtenant un rapport de la différence entre la longueur de salve maximum permise et

la longueur de salve minimum permise sur la différence entre le seuil de détermination supérieur préétabli et le seuil de détermination inférieur préétabli de la demande de salve, puis en multipliant le rapport avec la différence entre la demande de salve estimée et le seuil de détermination inférieur préétabli de la demande de salve, et en ajoutant le résultat de la multiplication à la longueur de salve minimum permise ;

la sous-unité de surveillance de longueur en file d'attente, adaptée pour actualiser le seuil de longueur de la file d'attente de convergence à la réception du seuil de longueur prédit de la file d'attente de convergence, envoyer un signal de déclenchement de convergence à une sous-unité de déclenchement de convergence, lorsqu'au cours de la surveillance, il est constaté que la longueur de la file d'attente de convergence atteint le seuil de longueur prédit de la file d'attente de convergence,

et envoyer la longueur de la file d'attente de convergence à la sous-unité adaptative de seuil de longueur à la réception du signal de requête de longueur de file d'attente de convergence ; et

la sous-unité de déclenchement de convergence, adaptée pour déclencher une convergence à la réception du signal de déclenchement de convergence envoyé par la sous-unité de surveillance de longueur de file d'attente ou si aucune convergence de salve n'a été réalisée dans la période à la réception du signal de fin de période envoyé par le temporisateur.

7. Système selon la revendication 6, dans lequel la sous-unité de surveillance de longueur de file d'attente comprend un compteur de salves, adapté pour ajouter 1 à une valeur de comptabilisation de celui-ci quand la sous-unité de surveillance de longueur de file d'attente génère le signal de déclenchement de convergence, et remettre à zéro la valeur de comptabilisation à la réception du seuil de longueur prédit de la file d'attente de convergence dans la période adaptative suivante.

8. Système selon la revendication 6, dans lequel l'unité de prédiction de trafic comprend :

une sous-unité de transformation logarithmique, adaptée pour exécuter une transformation logarithmique sur la quantité totale de paquets reçue dans la période adaptative ;

une sous-unité de transformation différentielle, adaptée pour exécuter une transformation différentielle sur un résultat reçu du résultat de transformation logarithmique envoyé par la sous-unité de transformation logarithmique ;

une sous-unité de prédiction unique par les moindres carrés normalisée, NLMS,

adaptée pour recevoir un résultat de la transformation différentielle envoyée par la sous-unité de transformation différentielle, calculer une valeur prédite d'un résultat d'une transformation différentielle de la quantité totale de paquets dans la période adaptative suivante en utilisant un algorithme NLMS, et envoyer la valeur prédite à une sous-unité de transformation différentielle inverse ;

la sous-unité de transformation différentielle inverse, adaptée pour recevoir la valeur prédite envoyée par la sous-unité de prédiction unique NLMS et le résultat de la transformation différentielle envoyé par la sous-unité de transformation logarithmique, ajouter le résultat de la transformation logarithmique à la valeur prédite, et obtenir une valeur prédite d'un résultat d'une transformation logarithmique de la quantité totale de paquets dans la période adaptative suivante ; et

une sous-unité de transformation logarithmique inverse, adaptée pour exécuter une transformation logarithmique inverse sur la valeur prédite reçue du résultat de la transformation logarithmique envoyé par la sous-unité de transformation différentielle inverse, et obtenir la valeur prédite de la quantité totale de paquets arrivant au niveau de la file d'attente de convergence dans la période adaptative suivante.

9. Système selon la revendication 6, dans lequel l'unité de prédiction de trafic comprend :

une sous-unité de transformation arc tangente, adaptée pour exécuter une transformation arc tangente sur la quantité totale de paquets reçue dans la période adaptative ;

une sous-unité de transformation différentielle relative, adaptée pour exécuter une transformation différentielle relative sur un résultat reçu de la transformation arc tangente envoyé par la sous-unité de transformation arc tangente ;

une sous-unité de prédiction unique NLMS, adaptée pour recevoir un résultat de la transformation différentielle relative envoyé par la sous-unité de transformation différentielle relative, et calculer une valeur prédite du résultat de la transformation différentielle relative de la quantité totale de paquets dans la période adaptative suivante en utilisant un algorithme NLMS ;

une sous-unité de transformation différentielle relative inverse, adaptée pour recevoir la valeur prédite du résultat de la transformation différentielle relative envoyé par la sous-unité de prédiction unique NLMS et le résultat de la transformation arc tangente envoyé par la sous-unité de transformation arc tangente, traiter la valeur prédite du résultat de la transformation différentielle relative et du résultat de la transformation arc tangente, et obtenir une valeur prédite d'un résultat d'une transformation arc tangente de la quantité totale de paquets dans la période adaptative suivante ; et

une sous-unité de transformation tangente, adaptée pour exécuter une transformation tangente sur la valeur prédite reçue du résultat de la transformation arc tangente envoyé par la sous-unité de transformation différentielle relative inverse, et obtenir la valeur prédite de la quantité totale de paquets arrivant au niveau de la file d'attente de convergence dans la période adaptative suivante.

```
┌─────────────┐
│   Length    │
│  threshold  │
│  adaptive   │
│   module    │
└─────────────┘
```

```
┌──────────────┐   ┌──────────────┐   ┌─────────┐
│ Queue length │   │ Convergence  │   │         │
│  monitoring  │   │  triggering  │   │  Timer  │
│    module    │   │     unit     │   │         │
└──────────────┘   └──────────────┘   └─────────┘
```

IP packets after
classification

Burst after
convergence

Convergence queue

FIG. 1

┌──────────────────────────────────────────────────┐
│ Receive a total amount of services arriving at a   │  201
│ convergence queue within a current adaptive period,│
│ and calculate a predicted value of a total amount  │
│ of the services arriving at the convergence queue  │
│ within a next period                               │
└──────────────────────────────────────────────────┘

┌──────────────────────────────────────────────────┐
│ Read a length of the current convergence queue,    │  202
│ add the length of the current convergence queue to │
│ the predicted value of the total amount of the     │
│ services arriving at the convergence queue within  │
│ the next period, and obtain an estimated burst     │
│ demand of the next adaptive period                 │
└──────────────────────────────────────────────────┘

┌──────────────────────────────────────────────────┐
│ Predict a length threshold of the convergence      │  203
│ queue within the next adaptive period according to │
│ a preset burst demand determination threshold and  │
│ the estimated burst demand                         │
└──────────────────────────────────────────────────┘

┌──────────────────────────────────────────────────┐
│ Trigger one convergence when the length of the     │  204
│ convergence queue reaches the length threshold or  │
│ no convergence is triggered within the current     │
│ period                                             │
└──────────────────────────────────────────────────┘

FIG. 2

Length threshold

Permitted
maximum burst
length $L_{max}$

Permitted
minimum burst
length $L_{min}$

0

0
Lower determination    Upper determination
threshold $B_{min}$ of      Threshold $B_{max}$ of         Estimated
burst demand          burst demand              burst demand

FIG. 3

Timer 407

Traffic
predicting unit 402

Length
threshold
adaptive
subunit 404

Traffic
counting unit 403

Queue
length
monitoring
subunit 405

Convergence
triggering
subunit 406

401

IP packets after
classification

Burst after
convergence

Convergence queue

FIG. 4

Input:
Actual traffic of services in each historical period

$M[n]$ | Logarithm transform subunit | 501

$Y[n]$ | Differential transform subunit | 502

$D[n]$ | NLMS one-step predicting subunit | 503

$Y[n]$

Output:
Predicted value of traffic of services in a next period

$\hat{M}[n+1]$ | Inverse logarithm transform subunit | 505

$\hat{Y}[n+1]$ | Inverse differential transform subunit | 504

$\hat{D}[n+1]$

FIG. 5

FIG.6

FIG.7

FIG.8

FIG.9

FIG.10

FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5349567 A

**Non-patent literature cited in the description**

- **ZHICHENG SUI ; QINGJI ZENG ; SHILIN XIAO.** Dynamic assembly on load estimate in optical burst-switched networks. *Proc. of SPIE,* 05 December 2005, vol. 6022 (602246), ISSN 0277-786X, 1-1, http://dx.doi.org/10.1117/12.636033
- **YANJUN LI ; XIAOBING HONG ; JIAN WU ; JINTONG L. LIN.** A study of adaptive burst assembly mechanism in optical burst switch networks. *Proc. SPIE,* 23 September 2004, vol. 5282, ISSN 0277-786X, 169-175
- **SUILI FENG et al.** *Limitation of and improvement to linear prediction and smoothing-based bandwidth allocation for VBR traffic,* 05 December 1999, vol. 1 A, 209-213
- **XIAOJUN CAO et al.** Assembling TCP/IP packets in optical burst switched networks. *GLOBECOM '02.2002-IEEE GLOBAL TELECOMMUNICATIONS CONFERENCE. CONFERENCE PROCEEDINGS. TAIPEI, TAIWAN,* 17 November 2002, vol. 3, ISBN 978-0-7803-7632-8, 2808-2812
- **CAO X et al.** Traffic Statistics and Performance Evaluation in Optical Burst Switched Networks. *JOURNAL OF LIGHTWAVE TECHNOLOGY IEEE SERVICE CENTER NEW YORK, NY, US,* 01 December 2004, vol. 22 (12), ISSN 0733-8724, 2722-2738